# FASCICULE DE BREVET EUROPEEN

(11) **EP 4 076 862 B1**
(45) Date de publication et mention de la délivrance du brevet: **07.02.2024**
(21) Numéro de dépôt: 20820457.8
(22) Date de dépôt: 14.12.2020
(51) Int. Cl.: B25J 9/00

(54) **EQUILIBREUR DE CHARGE PASSIF**
PASSIVER LASTAUSGLEICH
PASSIVE LOAD BALANCER

(30) Priorité: 20.12.2019 FR 1915151
(43) Date de publication de la demande: 26.10.2022
(73) Titulaire: Commissariat à l'Energie Atomique et aux Energies Alternatives, 75015 Paris (FR)
(72) Inventeur: CHAMBELLAN, Adrien, 91430 IGNY (FR); LAMY, Xavier, 92190 MEUDON (FR); RIWAN, Alain, 94550 CHEVILLY-LARUE (FR)
(74) Mandataire: Decorchemont, Audrey Véronique Christèle
(86) Numéro de dépôt international: PCT/EP2020/085935
(87) Numéro de publication internationale: WO 2021/122432

(56) Documents cités:
- EP-A2- 2 948 276
- WO-A1-2016/187275
- DE-A1-102016 123 797
- US-A1- 2017 224 517

## Description

### DOMAINE DE L'INVENTION

L'invention concerne le domaine de l'assistance au port de charge et plus particulièrement un équilibreur de charge passif, c'est-à-dire procurant un effort d'équilibrage sans apport d'énergie extérieur.

### ARRIERE PLAN DE L'INVENTION

Classiquement, un équilibreur de charge comprend un châssis relié à un utilisateur et un bras articulé sur le châssis autour d'un premier axe. Un moteur rotatif relie le châssis et le bras et exerce un couple d'équilibrage actif sur le bras autour du premier axe. Un tel équilibreur requiert une électronique de contrôle du moteur, des capteurs de position et/ou d'effort et une batterie électrique. Ces éléments aboutissent à un dispositif à l'autonomie limitée, pesant et encombrant. Ces inconvénients freinent la diffusion des équilibreurs de charge quand la réduction de la nocivité des tâches industrielles est un problème dont s'emparent les employeurs.

Le document EP 2 948 276 décrit un équilibreur de charge de l'art antérieur sur lequel repose le préambule de la revendication 1.

### OBJET DE L'INVENTION

L'invention a pour objet d'améliorer l'ergonomie et/ou l'autonomie d'un équilibreur de charge.

### RESUME DE L'INVENTION

A cet effet, on prévoit un équilibreur de charge passif comprenant un châssis, un bras articulé en sa première extrémité sur le châssis autour d'un premier axe d'articulation et un élément élastique pour exercer un couple d'équilibrage du bras autour du premier axe. Selon l'invention, l'équilibreur comprend également un élément souple de transmission relié en un premier point de liaison au bras articulé et en un deuxième point de liaison à l'élément élastique. Un premier renvoi d'élément souple de transmission est prévu pour dévier l'élément souple de transmission autour du premier axe. Un deuxième renvoi d'élément souple est prévu pour dévier l'élément souple de transmission autour d'un deuxième axe sensiblement parallèle au premier axe, le deuxième renvoi d'élément souple étant relié au châssis. L'équilibreur de charge comprend en outre des moyens de réglage de la position du deuxième renvoi relativement au bras articulé.

On obtient alors un équilibreur de charge qui fournit un effort d'équilibrage dont l'intensité est constante quelle que soit la position du bras articulé. L'équilibreur de charge est passif, ce qui signifie que l'application de l'effort d'équilibrage ne requiert pas un apport d'énergie, et qu'ainsi l'autonomie de l'équilibreur est quasiment illimitée.

Il est possible de finement régler l'intensité de la compensation de gravité lorsque l'équilibreur comprend des moyens de réglage de la position du premier point de liaison au bras articulé relativement au bras articulé. On réduit notablement les efforts parasites et la transparence du système est améliorée lorsque le premier point de liaison comprend un chariot solidaire du bras et pourvu d'une première gorge et une deuxième gorge et dans lesquelles s'étendent respectivement une première extrémité d'un premier câble et une deuxième extrémité du premier câble, le premier câble étant également engagé dans une troisième gorge d'un palonnier auquel est relié l'élément souple.

L'équilibreur de charge s'adapte facilement à l'orientation de l'effort à équilibrer grâce aux moyens de réglage de la position du deuxième renvoi relativement au bras.

Un tel réglage est facilité lorsque les moyens de réglage de la position du deuxième renvoi relativement au bras comprennent une platine solidaire du deuxième renvoi et qui est montée à rotation autour du premier axe, ainsi que des moyens de blocage en position de la platine par rapport au châssis.

Avantageusement l'équilibreur comprend des moyens de réglage d'une précharge de l'élément élastique.

Une réalisation particulièrement économique est obtenue lorsque l'élément élastique comprend un ressort. La sécurité de fonctionnement est alors améliorée lorsque l'équilibreur comprend un fourreau s'étendant autour du ressort.

En réduisant les frottements et donc la puissance nominale de l'élément élastique, on réduit le poids et l'encombrement de l'équilibreur lorsque le premier renvoi d'élément souple comprend une première poulie, et lorsque le deuxième renvoi d'élément souple comprend une deuxième poulie.

La compacité de l'équilibreur est améliorée lorsque les moyens de réglage d'une précharge de l'élément élastique comprennent un écrou coopérant avec un filetage, l'écrou étant également pourvu de moyens de bloquer sa rotation par rapport au filetage. On obtient une réalisation particulièrement économique lorsque les moyens de bloquer une rotation de l'écrou par rapport à la tige comprennent une lumière réalisée dans le fourreau et avec laquelle coopère un élément solidaire de l'écrou.

L'invention s'applique également à un exosquelette comprenant un équilibreur de charge tel que décrit ci-dessus.

D'autres caractéristiques et avantages de l'invention ressortiront à la lecture de la description qui suit de modes de réalisation particuliers non limitatifs de l'invention.

### BREVE DESCRIPTION DES DESSINS

[Fig. 1] la figure 1 est une vue schématique en perspective de l'équilibreur de charge selon l'invention ;
[Fig. 2] la figure 2 est une vue schématique en perspective d'une coupe de l'équilibreur de la figure 1 selon un premier plan ;
[Fig. 3] la figure 3 est une vue schématique en perspective d'une coupe de l'équilibreur de la figure 1 selon un deuxième plan orthogonal au premier plan ;
[Fig. 4] la figure 4 est une vue schématique en perspective d'un exosquelette selon l'invention.

### DESCRIPTION DETAILLEE DE L'INVENTION

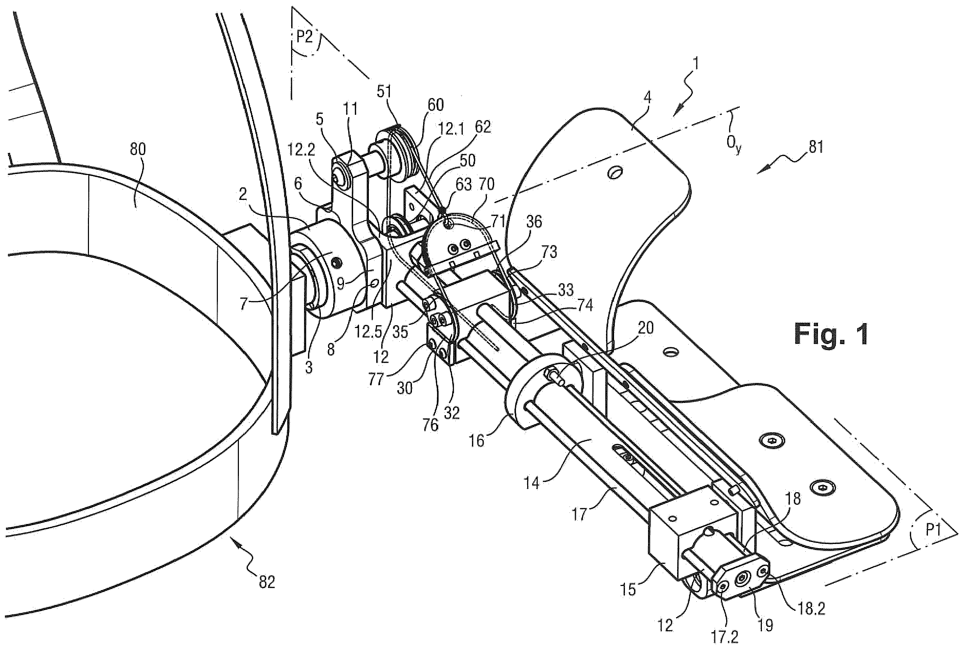

En référence aux figures 1 à 3, l'équilibreur de charge passif selon l'invention, et généralement désigné 1 comprend un châssis 2 sur lequel est monté un bras 10 articulé en sa première extrémité 11 autour d'un premier arbre 3 solidaire du châssis 2 et qui s'étend selon un premier axe Oy. Le châssis 2 est relié à un harnais thoracique 80 pour former un membre supérieur 81 gauche d'un exosquelette 82 partiel.

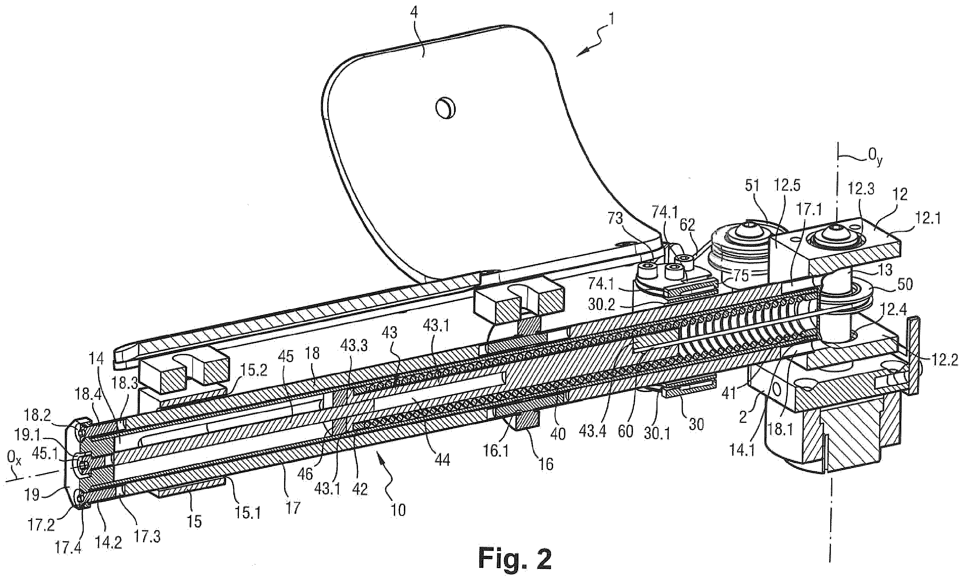

Comme visible en figure 2, le bras 10 comprend un étrier 12 dont la première oreille 12.1 et la deuxième oreille 12.2 comprennent respectivement un premier palier 12.3 et un deuxième palier 12.4. Le premier palier 12.3 et le deuxième palier 12.4 accueillent le premier arbre 3. L'âme 12.5 de l'étrier 12 comprend un perçage 12.6 comprenant un premier lamage circulaire 12.7. La première extrémité 14.1 d'un tube 14 cylindrique est engagé dans le premier lamage 12.7 et s'étend selon un deuxième axe Ox sensiblement orthogonal au premier axe Oy. Un premier support 15, un deuxième support 16 et un chariot 30 sont montés à coulissement sur le tube 14. Une première tige 17 et une deuxième tige 18 s'étendent parallèlement au deuxième axe Ox de part et d'autre du tube 14 depuis l'âme 12.5 de l'étrier 12 et sont solidaires jusqu'à une deuxième extrémité 14.2 du tube 14. La première tige 17 possède une première extrémité proximale 17.1 soudée à l'âme 12.5 et s'étend au travers d'un premier perçage 15.1 du premier support 15, d'un deuxième perçage 16.1 du deuxième support 16 et d'un troisième perçage 30.1 du chariot 30. La deuxième tige 18 possède une deuxième extrémité proximale 18.1 soudée à l'âme 12.5 et s'étend au travers d'un quatrième perçage 15.2 du premier support 15, d'un cinquième perçage 16.2 du deuxième support 16 et d'un sixième perçage 30.2 du chariot 30.

Un bouchon 19 ferme la deuxième extrémité 14.2 du tube 14 à l'aide d'une première vis 17.2 qui coopère avec un premier filetage 17.3 de la première extrémité distale 17.4 de la première tige 17 et à l'aide d'une deuxième vis 18.2 qui coopère avec un deuxième filetage 18.3 de la deuxième extrémité distale 18.4 de la deuxième tige 18.

Le deuxième support 16 comprend un troisième filetage 16.3 qui accueille une quatrième vis de pression 16.4.

Un support de bras 4 est fixé au premier support 15 et au deuxième support 16.

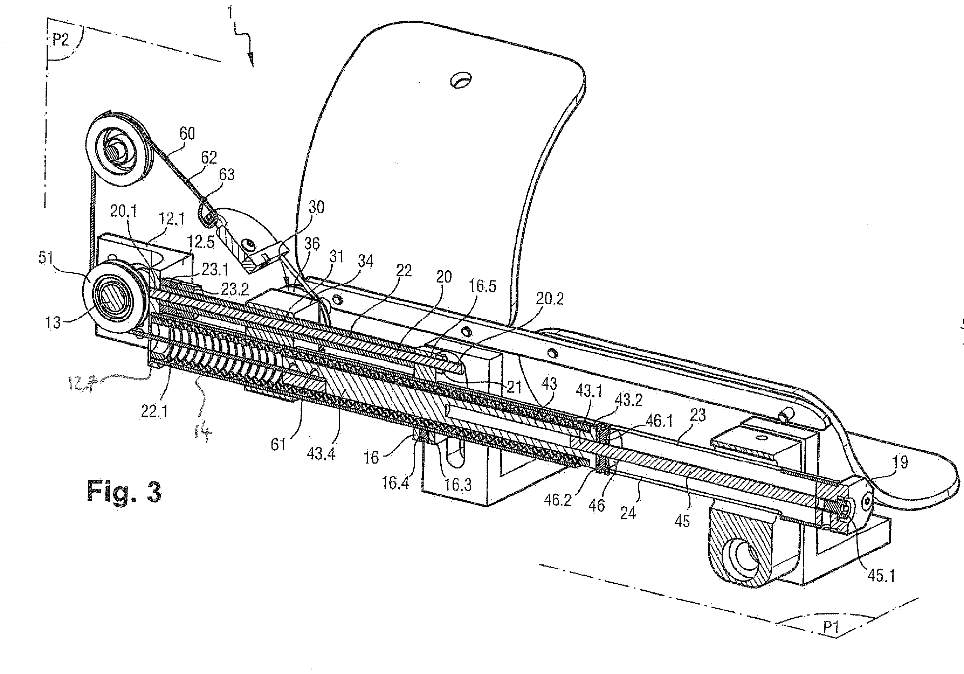

Comme visible en figure 3, une troisième tige 20 s'étend parallèlement au deuxième axe Ox dans un deuxième plan P2 orthogonal au premier plan P1 comprenant la première tige 17 et la deuxième tige 18. La troisième extrémité proximale 20.1 de la troisième tige 20 est soudée à l'âme 12.5 et la troisième extrémité distale 20.2 de la troisième tige 20 est filetée et s'étend à travers un septième perçage 16.5 du deuxième support 16. Un premier écrou 21 est engagé sur la troisième extrémité distale 20.2. Un manchon 22 fileté extérieurement est monté coaxialement à rotation sur la troisième tige 20. Un deuxième écrou 23.1 et un contre-écrou 23.2 sont engagés sur une quatrième extrémité proximale 22.1 du manchon 22. Le chariot 30 comprend un quatrième filetage 31 qui coopère avec le manchon 22.

Le chariot 30 comprend une première flasque 32 droite et une deuxième flasque 33 gauche vissées sur un corps 34 du chariot 30. La première flasque 32 présente une première gorge 35 et la deuxième flasque comprend une deuxième gorge 36.

Comme visible sur les figures 2 et 3, un ressort 40 hélicoïdal de compression s'étend dans le tube 14 selon le deuxième axe Ox et comprend une extrémité proximale 41 en appui contre l'âme 12.5. L'extrémité distale 42 du ressort 40 reçoit un premier élément 43. Le premier élément 43 comprend une première portion 43.1 en forme de cylindre droit dont le premier diamètre extérieur est sensiblement inférieur au diamètre intérieur du ressort 40 et qui est engagée à l'intérieur du ressort 40. Le premier élément 43 comprend également en son extrémité distale 43.2 une deuxième portion 43.3 en forme de disque dont le diamètre extérieur est sensiblement égal au diamètre intérieur du tube 14 et qui vient en appui contre l'extrémité distale 42 du ressort 40. Le premier élément 43 comprend également un huitième perçage 44 s'étendant selon le deuxième axe Ox et dans lequel s'étend le corps d'une cinquième vis 45 dont la tête 45.1 est reçue dans un deuxième lamage 19.1 du bouchon 19. Un troisième écrou 46 coopère avec la cinquième vis 45 et vient en appui contre la deuxième portion 43.3 du premier élément 43. Le troisième écrou 46 comprend un premier téton 46.1 et un deuxième téton 46.2 diamétralement opposés et qui coopèrent respectivement avec une première lumière 23 et une deuxième lumière 24 du tube 14 pour bloquer la rotation du troisième écrou 46 relativement au tube 14.

L'équilibreur 1 comprend une première poulie 50 solidaire de l'axe 13 et qui s'étend entre la première oreille 12.1 et la deuxième oreille 12.2. L'équilibreur 1 comprend également une deuxième poulie 51 montée à rotation sur une platine 5. La première poulie 50 et la deuxième poulie 51 sont, ici, de rayon identique. La platine 5 est montée à rotation autour de l'axe 13 et possède une première surface crantée 6 qui fait face à une deuxième surface crantée 7 du châssis 2. Une sixième vis pointeau 8 est engagée dans un neuvième perçage 9 de la platine 5 pour venir en appui contre le premier arbre 3.

Comme visible en figure 2 et 3, un filin 60 est serti par un premier sertissage 61.1 en sa première extrémité 61 sur l'extrémité proximale 43.4 du premier élément 43 et s'étend jusqu'à la première poulie 50.

Le filin 60 est renvoyé par la première poulie 50 vers la deuxième poulie 51. La deuxième poulie 51 renvoie le filin 60 vers le bras 10. La deuxième extrémité 62 du filin 60 est nouée à l'aide d'un noeud 63 dans un premier œillet 71 d'un palonnier 70. Le palonnier 70 comprend également une troisième gorge 72 dans laquelle s'étend un premier câble 73. La première extrémité 74 du premier câble 73 s'étend dans la première gorge 35 et est reliée au chariot 30 à l'aide d'un deuxième sertissage 74.1 bloqué par une première plaquette 75 rapportée sur le chariot 30 par vissage. La deuxième extrémité 76 du premier câble 73 s'étend dans la deuxième gorge 36 et est reliée au chariot 30 à l'aide d'un troisième sertissage 76.1 bloqué par une deuxième plaquette 77 rapportée sur le chariot 30 par vissage.

Le noeud 63 correspond à un premier point de liaison du filin 60 au bras articulé 10 et le premier sertissage 61.1 correspond à un deuxième point de liaison au bras articulé 10.

La mise en œuvre et le fonctionnement de l'exosquelette 82 selon l'invention va maintenant être décrit en référence avec les figures 1 à 4.

Selon une étape préliminaire, un technicien agit sur la cinquième vis 45 de manière à déplacer le troisième écrou 46 pour qu'il vienne appuyer sur le premier élément 43. Le déplacement du troisième écrou 46 comprime le ressort 40 et met celui-ci en précharge. Lorsque le niveau de précharge souhaité est atteint (généralement indexée sur une estimation du poids d'un bras d'un utilisateur), le technicien ajuste la longueur du filin 60 et noue la deuxième extrémité 62 sur l'œillet 71.

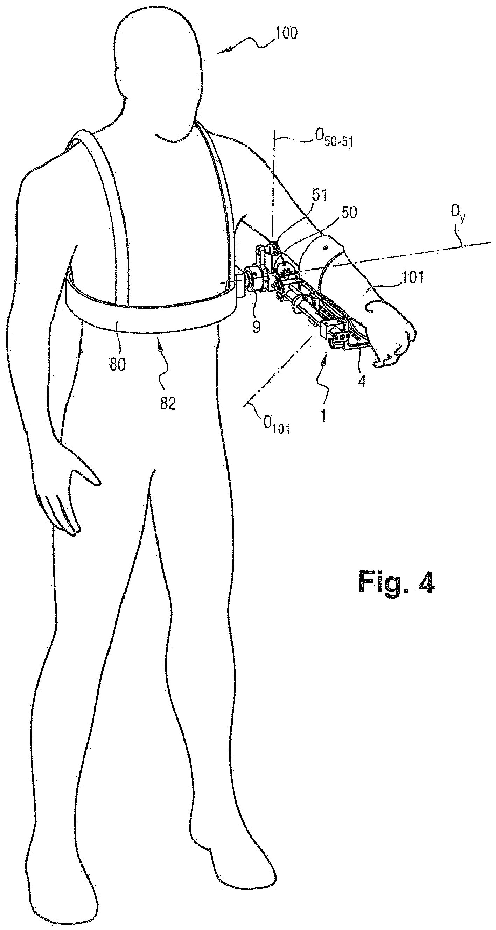

Selon une première étape, le membre supérieur 81 gauche de l'exosquelette 82 est positionné sur un utilisateur 100 à l'aide du harnais thoracique 80 de manière à ce que son avant-bras gauche 101 vienne reposer sur le support de bras 4 (figure 4). La position du support de bras 4 relativement et à l'utilisateur 100 peut être ajustée en translatant le support de bras 4 relativement au bras 10 après desserrage de la quatrième vis de pression 16.4. Le blocage en position du support de bras 4 sur le bras 10 se fait en resserrant la quatrième vis de pression 16.4.

Selon une deuxième étape, on dévisse ensuite la sixième vis pointeau 8 de manière à pouvoir séparer la première surface crantée 6 de la platine 5 et la deuxième surface crantée 7 du châssis 2. La position angulaire relative de la deuxième poulie 51 par rapport à la première poulie 50 autour du premier axe Oy peut alors être librement ajustée. Cette position est ajustée de manière à ce que la direction O50-51 qui relie les centres de rotation de la première poulie 50 et de la deuxième poulie 51 soit sensiblement parallèle à la direction O101 de la résultante des efforts appliqués sur l'équilibreur de charge 1 par le bras 101 lorsqu'il se trouve dans la position de travail que l'on cherche à équilibrer. Lorsque la position d'équilibre est établie, on rapproche la première surface crantée 6 de la platine 5 et la deuxième surface crantée 7 du châssis 2 de manière à ce qu'elles coopèrent ensemble et on resserre la sixième vis pointeau 8.

Selon une troisième étape, on dévisse la cinquième vis 45 pour déplacer le troisième écrou 46 et libérer l'action du ressort 40. La position du troisième écrou 46 définit alors une butée haute de l'équilibreur de charge 1.

Selon une quatrième étape, on agit sur le deuxième écrou 23.1 et le contre écrou 23.2 pour provoquer une rotation du manchon 22 afin de régler la distance séparant le chariot 30 de l'âme 12.5 et d'ainsi régler le point d'équilibre de l'équilibreur de charge 1.

Bien entendu, l'invention n'est pas limitée à ce qui vient d'être décrit, mais englobe toute variante entrant dans le cadre de l'invention défini par les revendications.

En particulier,
- bien qu'ici l'équilibreur soit pourvu d'un harnais thoracique, l'invention s'applique également à d'autres moyens de liaison à un utilisateur comme par exemple une sangle ou une combinaison pour constituer un exosquelette partiel ou complet ;
- bien qu'ici le bras comprenne un tube cylindrique qui s'étend autour du ressort, l'invention s'applique également à d'autres types de fourreau pour le ressort, comme par exemple un tube carré, triangulaire, ovale ou de section quelconque ;
- bien qu'ici l'équilibreur comprenne un ressort de compression, l'invention s'applique également à d'autres types d'élément élastique comme par exemple un ressort de compression, un empilement de rondelles Belleville, un bloc élastomère, un ressort à gaz ou à air ;
- bien qu'ici le tube soit solidarisé à l'étrier à l'aide de tiges, l'invention s'applique également à d'autres moyens de solidariser le tube à l'étrier comme par exemple le brasage, le soudage, le vissage ou l'emmanchement à force ;
- bien qu'ici les tiges soient solidarisées à l'étrier par soudage, l'invention s'applique également à d'autres moyens de solidariser les tiges à l'étrier comme par exemple le brasage, le vissage ou l'emmanchement à force ;
- bien qu'ici le chariot comprenne des flasques vissées sur un corps, l'invention s'applique également à d'autres moyens de rapporter des gorges sur le chariot comme par exemple une flasque soudée ou des gorges directement usinées dans le chariot ;
- bien qu'ici l'équilibreur comprenne un premier élément de liaison avec le ressort, l'invention s'applique également à d'autres moyens de relier l'élément élastique au câble en un deuxième point de liaison comme par exemple un serre-câble, un étrier en fil plié ;
- bien qu'ici les moyens de précharge comprennent une cinquième vis, l'invention s'applique également à d'autres moyens de réaliser un filetage comme par exemple une tige filetée, un arbre totalement ou partiellement fileté sur sa face intérieure ou extérieure ;
- bien qu'ici l'équilibreur de charge comprenne des poulies de renvoi de câble, l'invention s'applique également à d'autres types de renvoi de filin comme par exemple un arbre monté à rotation, un œillet métallique ou synthétique, un arbre fixe en matière limitant la friction de type bronze ou PTFE ;
- bien qu'ici les poulies de renvoi aient un rayon identique, l'invention s'applique également à des poulies de renvoi de rayon différents ;
- bien qu'ici l'équilibreur comprenne un filin, l'invention s'applique également à d'autres types d'éléments souples de transmission comme par exemple tout composant flexible de section pleine ou tubulaire de forme circulaire, plate ou autre, l'élément souple pouvant être composé de sous éléments articulés entre eux, comme par exemple une chaîne ou une courroie ;
- bien qu'ici la platine et le châssis comprennent chacun une surface crantée pouvant sélectivement coopérer, l'invention s'applique également à d'autres moyens de réglage de la position du deuxième renvoi relativement au bras comme par exemple un goupillage, des surfaces de friction, un assemblage par lumières et crabots, des vis pression, des clavettes ou des surfaces de friction ;
- bien qu'ici le filin soit fixé au premier élément par un sertissage, l'invention s'applique également à d'autres moyens de réaliser le deuxième point de liaison à l'élément élastique comme par exemple une soudure, un noeud, un serre-câble ou des tours morts ;
- bien qu'ici le filin soit fixé au palonnier par un noeud, l'invention s'applique également à d'autres moyens de réaliser le premier point de liaison au bras comme par exemple un sertissage, une soudure, un serre-câble ou des tours morts ;
- bien qu'ici le filin soit relié au bras par l'intermédiaire d'un palonnier à une entrée et deux sorties, l'invention s'applique également à d'autres types de premier de liaison du filin au bras, comme par exemple un palonnier à une entrée et quatre sorties ou une liaison directe sans palonnier ou une simple sertissure divisant le filin en deux brins ;
- bien qu'ici la mise en œuvre de l'exosquelette et son réglage ait été décrit par une succession d'étapes, l'invention s'applique également à un ordre différent des étapes comme par exemple un réglage du porte bras antérieurement à l'installation sur l'utilisateur ;
- bien qu'ici la première gorge du chariot et la deuxième gorge du chariot accueillent respectivement la première et la deuxième extrémité d'un même câble, l'invention s'applique également à d'autres configurations comme par exemple une première gorge qui accueille l'extrémité d'un premier câble et une deuxième gorge qui accueille une deuxième extrémité d'un deuxième câble, le premier et le deuxième câbles étant solidaires du palonnier ;
- bien qu'ici l'équilibreur de charge soit positionné sur l'utilisateur de manière à ce que son avant-bras gauche vienne reposer sur le support de bras, l'invention s'applique également à un équilibreur de charge positionné sur l'arrière bras de l'utilisateur.

## Revendications

1. Equilibreur de charge passif (1) comprenant
- un châssis (2) ;
- un bras (10) articulé en sa première extrémité (11) sur le châssis (2) autour d'un premier axe (Oy) d'articulation ;
- un élément élastique (40) pour exercer un couple d'équilibrage du bras (10) autour du premier axe (Oy) ;
l'équilibreur de charge passif (1) comprenant également :
- un élément souple de transmission (60) relié en un premier point de liaison au bras articulé (10) et en un deuxième point de liaison (à l'élément élastique (40) ;
- un premier renvoi (50) d'élément souple de transmission pour dévier l'élément souple de transmission (60) autour du premier axe (Oy) ;
- un deuxième renvoi (51) d'élément souple pour dévier l'élément souple de transmission (60) autour d'un deuxième axe sensiblement parallèle au premier axe (Oy), le deuxième renvoi (51) d'élément souple étant relié au châssis (2), **caractérisé en ce que** l'équilibreur de charge comprend des moyens de réglage (6,7) de la position du deuxième renvoi (51) relativement au bras articulé (10).

2. Equilibreur de charge passif (1) selon la revendication 1, comprenant des moyens de réglage (22, 23.1, 23.2) de la position du premier point de liaison (71) au bras articulé (10) relativement au bras articulé (10).

3. Equilibreur de charge passif (1) selon la revendication 1 ou 2, dans lequel le premier point de liaison (71) comprend un chariot (30) solidaire du bras articulé (10) et pourvu d'une première gorge (35) et une deuxième gorge (36) et dans lesquelles s'étendent respectivement une première extrémité (74) d'un premier câble (73) et une deuxième extrémité (76) du premier câble (73), le premier câble (73) étant également engagé dans une troisième gorge (72) d'un palonnier (70) auquel est relié l'élément souple de transmission (60).

4. Equilibreur de charge passif (1) selon la revendication 1, dans lequel les moyens de réglage (6,7) de la position du deuxième renvoi (51) relativement au bras articulé (10) comprennent une platine (5) solidaire du deuxième renvoi (51) et qui est montée à rotation autour du premier axe (Oy), ainsi que des moyens de blocage (8) en position de la platine (5) par rapport au châssis (2).

5. Equilibreur de charge passif (1) selon l'une quelconque des revendications précédentes, comprenant des moyens de réglage (45, 46) d'une précharge de l'élément élastique (40).

6. Equilibreur de charge passif (1) selon l'une quelconque des revendications précédentes, dans lequel l'élément élastique (40) comprend un ressort.

7. Equilibreur de charge passif (1) selon la revendication 6, comprenant un fourreau (14) s'étendant autour du ressort (40).

8. Equilibreur de charge passif (1) selon l'une quelconque des revendications précédentes, dans lequel le premier renvoi d'élément souple comprend une première poulie (50), et dans lequel le deuxième renvoi d'élément souple comprend une deuxième poulie (51).

9. Equilibreur de charge passif (1) selon la revendication 5, dans lequel les moyens de réglage d'une précharge de l'élément élastique (40) comprennent un écrou (46) coopérant avec un filetage (45), l'écrou (46) étant également pourvu de moyens de bloquer sa rotation (23, 24, 46.1, 46.2) par rapport au filetage (45).

10. Equilibreur de charge passif (1) selon les revendications 7 et 9, dans lequel les moyens de bloquer une rotation (23, 24, 46.1, 46.2) de l'écrou (46) par rapport au filetage (45) comprennent une lumière (23, 24) avec laquelle coopère un élément (46.1, 46.2) solidaire de l'écrou (46).

11. Exosquelette (82) comprenant un équilibreur de charge passif (1) selon l'une quelconque des revendications précédentes.

## Patentansprüche

1. Passiver Lastausgleicher (1), umfassend:
- einen Rahmen (2);
- einen Arm (10), der an seinem ersten Ende (11) an dem Rahmen (2) um eine erste Gelenkverbindungsachse (Oy) angelenkt ist;
- ein elastisches Element (40) zum Ausüben eines Ausgleichsdrehmoments auf den Arm (10) um die erste Achse (Oy);
wobei der passive Lastausgleicher (1) ferner umfasst:
- ein flexibles Übertragungselement (60), das an einem ersten Verbindungspunkt mit dem angelenkten Arm (10) und an einem zweiten Verbindungspunkt mit dem elastischen Element (40) verbunden ist;
- eine erste Umlenkung (50) des flexiblen Übertragungselements, um das flexible Übertragungselement (60) um die erste Achse (Oy) umzulenken;
- eine zweite Umlenkung (51) des flexiblen Elements, um das flexible Übertragungselement (60) um eine zweite Achse umzulenken, die im Wesentlichen parallel zur ersten Achse (Oy) ist, wobei die zweite Umlenkung (51) des flexiblen Elements mit dem Rahmen (2) verbunden ist, **dadurch gekennzeichnet, dass**
der Lastausgleicher Einstellmittel (6, 7) zum Einstellen der Position der zweiten Umlenkung (51) relativ zu dem angelenkten Arm (10) umfasst.

2. Passiver Lastausgleicher (1) nach Anspruch 1, umfassend Einstellmittel (22, 23.1, 23.2) zum Einstellen der Position des ersten Verbindungspunkts (71) mit dem angelenkten Arm (10) relativ zum angelenkten Arm (10).

3. Passiver Lastausgleicher (1) nach Anspruch 1 oder 2, bei dem der erste Verbindungspunkt (71) einen Schlitten (30) umfasst, der fest mit dem angelenkten Arm (10) verbunden und mit einer ersten Nut (35) und einer zweiten Nut (36) versehen ist, in denen sich ein erstes Ende (74) eines ersten Kabels (73) und ein zweites Ende (76) des ersten Kabels (73) erstrecken, wobei das erste Kabel (73) ferner in eine dritte Nut (72) eines Ausgleichshebels (70) eingreift, mit dem das flexible Übertragungselement (60) verbunden ist.

4. Passiver Lastausgleicher (1) nach Anspruch 1, bei dem die Einstellmittel (6, 7) zum Einstellen der Position der zweiten Umlenkung (51) relativ zum angelenkten Arm (10) eine Platte (5) umfassen, die fest mit der zweiten Umlenkung (51) verbunden ist und die drehbar um die erste Achse (Oy) gelagert ist, sowie Blockiermittel (8) zum Blockieren der Platte (5) in Position relativ zum Rahmen (2).

5. Passiver Lastausgleicher (1) nach einem der vorhergehenden Ansprüche, umfassend Einstellmittel (45, 46) zum Einstellen einer Vorbelastung des elastischen Elements (40).

6. Passiver Lastausgleicher (1) nach einem der vorhergehenden Ansprüche, bei dem das elastische Element (40) eine Feder umfasst.

7. Passiver Lastausgleicher (1) nach Anspruch 6, umfassend eine Hülse (14), die sich um die Feder (40) herum erstreckt.

8. Passiver Lastausgleicher nach einem der vorhergehenden Ansprüche, bei dem die erste Umlenkung des flexiblen Elements eine erste Riemenscheibe (50) umfasst, und bei dem die zweite Umlenkung des flexiblen Elements eine zweite Riemenscheibe (51) umfasst.

9. Passiver Lastausgleicher (1) nach Anspruch 5, bei dem die Einstellmittel zum Einstellen einer Vorbelastung des elastischen Elements (40) eine Mutter (46) umfassen, die mit einem Gewinde (45) zusammenwirkt, wobei die Mutter (46) ferner mit Drehblockiermitteln (23, 24, 46.1, 46.2) zur Blockierung ihrer Drehung in Bezug auf das Gewinde (45) versehen ist.

10. Passiver Lastausgleicher (1) nach den Ansprüchen 7 und 9, bei dem die Drehblockiermittel (23, 24, 46.1, 46.2) zur Drehblockierung der Mutter (46) in Bezug auf das Gewinde (45) ein Schlitzloch (23, 24) umfassen, mit dem ein fest mit der Mutter (46) verbundenes Element (46.1, 46.2) zusammenwirkt.

11. Exoskelett (82), umfassend einen passiven Lastausgleicher (1) nach einem der vorhergehenden Ansprüche.

## Claims

1. A passive load balancer (1) comprising:
• a structure (2);
• an arm (10) having a first end (11) hinged to the structure (2) about a first hinge axis (Oy); and
• a resilient element (40) for exerting a balancing torque on the arm (10) about the first axis (Oy);
the passive load balancer (1) further comprising:
• a flexible transmission element (60) connected at a first connection point to the hinged arm (10) and at a second connection point to the resilient element (40);
• a first flexible transmission element deflector (50) for deflecting the flexible transmission element (60) about the first axis (Oy); and
• a second flexible transmission element deflector (51) for deflecting the flexible transmission element (60) about a second axis substantially parallel to the first axis (Oy), the second flexible transmission element deflector (51) being connected to the structure (2);
the load balancer being **characterized in that** it includes adjustment means (6, 7) for adjusting the position of the second deflector (51) relative to the hinged arm (10).

2. A passive load balancer (1) according to claim 1, including adjustment means (22, 23.1, 23.2) for adjusting the position of the first connection point (71) with the hinged arm (10) relative to the hinged arm (10).

3. A passive load balancer (1) according to claim 1 or claim 2, wherein the first connection point (71) comprises a carriage (30) secured to the hinged arm (10) and provided with a first groove (35) and with a second groove (36) in which there extend respectively a first end (74) of a first cable (73) and a second end (76) of the first cable (73), the first cable (73) also being engaged in a third groove (72) of a spreader (70) to which the flexible transmission element (60) is connected.

4. A passive load balancer (1) according to claim 1, wherein the adjustment means (6, 7) for adjusting the position of the second deflector (51) relative to the hinged arm (10) comprise a plate (5) secured to the second deflector (51) and rotatably mounted about the first axis (Oy), together with locking means (8) for locking the plate (5) in position relative to the structure (2).

5. A passive load balancer (1) according to any preceding claim, including adjustment means (45, 46) for adjusting pre-loading of the resilient element (40).

6. A passive load balancer (1) according to any preceding claim, wherein the resilient element (40) comprises a spring.

7. A passive load balancer (1) according to claim 6, including a sheath (14) extending around the spring (40).

8. A passive load balancer (1) according to any preceding claim, wherein the first flexible element deflector comprises a first pulley (50) and wherein the second flexible element deflector for deflecting the flexible element comprises a second pulley (51).

9. A passive load balancer (1) according to claim 5, wherein the means for adjusting pre-loading of the resilient element (40) comprise a nut (46) cooperating with a thread (45), the nut (46) also being provided with means (23, 24, 46.1, 46.2) for preventing it from rotating relative to the thread (45).

10. A passive load balancer (1) according to claims 7 and 9, wherein the means (23, 24, 46.1, 46.2) for preventing the nut (46) from rotating relative to the thread (45) comprise a slot (23, 24) that co-operates with an element (46.1, 46.2) that is secured to the nut (46).

11. An exoskeleton (82) including a passive load balancer (1) according to any preceding claim.
